(19) **Europäisches Patentamt**
**European Patent Office**
**Office européen des brevets**

(11) **EP 3 803 491 B1**

(12) **FASCICULE DE BREVET EUROPEEN**

(45) Date de publication et mention
de la délivrance du brevet:
**29.04.2026 Bulletin 2026/18**

(21) Numéro de dépôt: **19725749.6**

(22) Date de dépôt: **27.05.2019**

(51) Classification Internationale des Brevets (IPC):
*G02B 13/16* (2006.01)    *G02B 23/12* (2006.01)
*G02B 25/00* (2006.01)    *G02B 27/00* (2006.01)
*F41G 1/38* (2006.01)    *F41G 1/40* (2006.01)

(52) Classification Coopérative des Brevets (CPC):
**G02B 23/12; F41G 1/38; F41G 1/40; G02B 13/16; G02B 25/001; G02B 27/0012**

(86) Numéro de dépôt international:
**PCT/EP2019/063584**

(87) Numéro de publication internationale:
**WO 2019/233794 (12.12.2019 Gazette 2019/50)**

(54) **LUNETTE DE VISION DE NUIT COMPORTANT UN OCULAIRE A TRANSPORT D'IMAGE CORRIGEE DE LA DISTORSION ET PROCEDE DE CALCUL ASSOCIE**

NACHTSICHTFERNROHR MIT EINEM OKULAR ZUM TRANSPORT EINES VERZERRUNGSKORRIGIERTEN BILDES UND ZUGEHÖRIGES BERECHNUNGSVERFAHREN

NIGHT VISION SCOPE COMPRISING AN EYEPIECE FOR TRANSPORTING A DISTORTION-CORRECTED IMAGE AND ASSOCIATED CALCULATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2018 FR 1800579**

(43) Date de publication de la demande:
**14.04.2021 Bulletin 2021/15**

(73) Titulaire: **THALES**
**92190 Meudon (FR)**

(72) Inventeur: **NARCY, Gabriel**
**42570 SAINT HEAND (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**EP-A2- 0 777 142    FR-A1- 2 784 201**
**US-A- 4 934 771    US-A- 5 604 630**
**US-A1- 2010 277 792**

• "Handbook of optical systems, Aberration theory and correction of optical systems", 1 January 2007, WILEY-VCH, Weinheim, DE, ISBN: 978-3-527-40379-0, article HERBERT GROSS ET AL: "Handbook of Optical Systems, Vol.3: Aberration Theory and Correction of Optical Systems", pages: 261 - 265, XP055555921
• "Handbook of optical systems, Aberration theory and correction of optical systems", 1 January 2007, WILEY-VCH, Weinheim, DE, ISBN: 978-3-527-40379-0, article HERBERT GROSS ET AL: "Handbook of Optical Systems, Vol.3: Aberration Theory and Correction of Optical Systems", pages: 337 - 359, XP055555922

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Le domaine de l'invention est celui des lunettes de vision de nuit comportant un intensificateur de lumière. Plus précisément, l'objet de l'invention porte sur les dispositifs inverseurs d'image.

Classiquement, une lunette de vision de nuit comporte un objectif, un dispositif d'intensification de la lumière qui forme de l'image issue de l'objectif une image intensifiée et un oculaire d'observation. Le dispositif d'intensification de la lumière comporte une photocathode qui transforme les photons de l'image issue de l'objectif en électrons, une galette de microcanaux qui réalise une amplification électronique de ces électrons et un écran phosphorescent qui transforme les électrons amplifiés en photons, les électrons ayant été accélérés entre la galette de microcanaux et l'écran phosphorescent. Il existe différents types de photocathode. On citera les photocathodes AsGa ou multi alcalines. Il existe également différents types de phosphores. Les phosphores de type P22 ou P43 émettent dans le vert, les phosphores de type P45 émettent dans le blanc.

L'image ainsi amplifiée est observée au moyen d'un oculaire. Typiquement, le champ vu a un diamètre de l'ordre de 40 degrés. Sa focale standard est de 27 mm, identique à celle de l'objectif. Le tirage d'œil est de 25 mm.

Si la lunette ne comportait que ces éléments, l'image serait vue inversée par l'observateur. La lunette comporte donc obligatoirement un dispositif optique permettant d'inverser l'image issue de l'objectif. Il en existe de différents types.

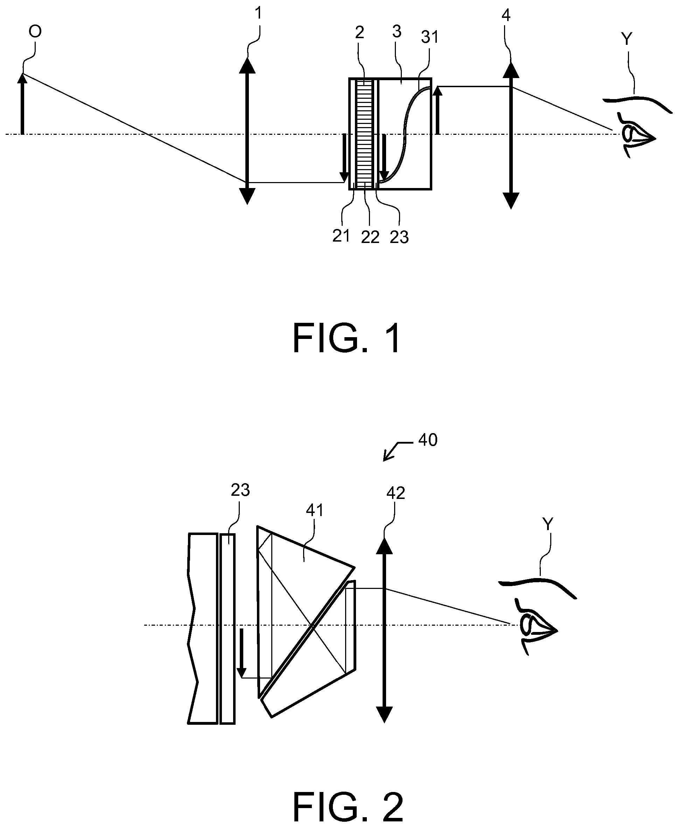

Le premier dispositif consiste à placer contre l'écran phosphorescent un pavé de fibres optiques inverseuses. Le schéma d'une lunette de ce type est représenté sur la figure 1. Cette lunette comporte dans cet ordre, l'objectif 1, le dispositif d'intensification de la lumière 2, le pavé 3 comportant les fibres inverseuses 31 et l'oculaire 4. Le dispositif d'intensification 2 comporte la photocathode 21, la galette de microcanaux 22 et l'écran phosphorescent 23. L'observateur est symbolisé par un œil Y. L'objet O et ses différentes images à travers le dispositif sont représentés par des flèches orientées. Le parcours des rayons lumineux est représenté en traits fins. Actuellement, il est possible de disposer de pavés de fibres optiques à haute résolution. Par exemple, un pavé peut avoir une résolution de 64 pl/mm, « pl » signifiant paire de lignes. Pour un diamètre typique d'écran de 18 mm, on obtient ainsi une résolution de 2300 points par ligne. Ces pavés de fibres optiques dédiés à l'intensification sont spécifiées par la norme MIL-I-49428 intitulée « Military Specification : Image Intensifier assembly, 18 mm, microchannel wafer » (06-Nov-1989).

Les pavés de fibres inverseuses présentent dans la pratique un certain nombre de défauts intrinsèques à leur technologie de réalisation et introduisant des artefacts dans l'image réduisant ainsi les performances intrinsèques des tubes à intensification. Ces défauts appelés en terminologie anglo-saxonne « shear distortion », « gross distorsion », « image inversion » et « chicken wire »sont décrits au paragraphe § 3.5.2 de la norme MIL-I-49428 et sont détaillés ci-dessous.

Le pavé de fibres inverseuses peut introduire un défaut d'alignement important entre l'entrée et la sortie du tube intensificateur. Ce défaut est décrit au § 3.6.14 de la norme MIL-I-49428. Ce défaut génère un défaut de parallélisme entre le champ d'entrée et le champ de sortie du monoculaire et un défaut de parallélisme entre le champ perçu par l'œil droit et le champ perçu par l'œil gauche lorsque les deux monoculaires sont montés sur un même support en configuration bi-monoculaire. De même, à cause de la présence du pavé de fibres inverseuses, un désalignement du tube lui-même par rapport aux optiques introduit aussi un défaut de parallélisme. Quand, les défauts de parallélisme tolérables sont faibles, par exemple pour des applications avioniques, il faut introduire un réglage optique pour les compenser.

Par ailleurs, le pavé de fibres peut générer des pertes de FTM, acronyme de « Fonction de Transfert de Modulation » et de contraste par la perte de modulation au voisinage de la fréquence nulle non prise en compte dans la FTM. Ces pertes peuvent être importantes dans le champ.

Des défauts d'uniformité de luminance peuvent également apparaître et être notables. Ces pertes et ces défauts d'uniformité sont plus ou moins forts en fonction de la zone de l'indicatrice d'émission exploitée par l'oculaire en sortie de tube. Ces pertes obligent à dimensionner l'oculaire afin exploiter les rayons dont l'indicatrice d'émission diverge par rapport à l'axe optique de l'oculaire et donc grossir les diamètres des lentilles oculaires. Il faut alors contrôler la position de la pupille dans l'espace de l'écran, ce qui enlève un degré de liberté lors du design optique de l'oculaire.

Enfin, lorsque la lunette de vision de nuit est portée par un utilisateur, la présence de fibres optiques inverseuses apporte un poids supplémentaire qui n'est pas nécessairement négligeable.

Un autre type de solution pour inverser l'image consiste à introduire entre l'écran phosphorescent et l'oculaire un ensemble de prismes redresseur. Ainsi, le brevet US 5 898 519 intitulé « Compact Night Vision Device » décrit une solution de ce type. L'ensemble oculaire 40 décrit dans ce document est reproduit sur la figure 2. Il comporte un prisme de Schmidt-Pechan 41 disposé entre l'écran 23 et l'oculaire 42 qui permet de redresser l'image. Le brevet FR 2 721 719 intitulé « Jumelle compacte de vision nocturne » décrit également une combinaison optique dans laquelle un des deux oculaires comporte un ensemble redresseur comportant deux prismes en toit. Les prismes ont l'avantage, par rapport à la solution précédente, de conserver une excellente qualité d'image. Cependant, les solutions à prisme sont nécessairement des solutions où l'axe optique est replié. Ce repliement est peu compatible de certaines configurations d'utilisation de la lunette de vision de nuit, comme, par exemple, le montage sur une arme. Par ailleurs, ces solutions sont mécaniquement plus complexes.

Un dernier type de solution pour inverser l'image consiste à introduire un transport d'image entre l'écran et l'oculaire proprement dit. Cette solution a de nombreux avantages, à condition que l'image perçue soit de bonne qualité. Comme on l'a vu, les champs des objectifs et des oculaires des lunettes de vision de nuit sont généralement importants, de l'ordre de 40 degrés. Il est donc essentiel de conserver une bonne qualité d'image dans tout le champ. L'aberration optique susceptible de dégrader fortement la qualité de cette image est la distorsion qui augmente, en première approximation, en fonction de la puissance trois du champ. Ainsi, il est courant d'observer des distorsions pouvant atteindre 40% à 50%.

Le brevet US 5 604 630 intitulé « Night Vision Monocular with balanced optics » décrit une solution optique comportant un oculaire à transport d'image. La particularité de cette architecture optique est que l'objectif et l'oculaire comportent des sous-ensembles optiques identiques. Cette symétrie permet de réduire la distorsion du système. Cependant, le choix d'architectures voisines pour l'objectif et pour l'oculaire présente d'autres inconvénients.

Le procédé de dimensionnement d'un oculaire à transport d'image de lunette de vision de nuit selon l'invention permet d'optimiser la combinaison optique en laissant subsister une aberration de distorsion compatible d'une résolution donnée en bord de champ.

Plus précisément, l'invention a pour objet une lunette de vision de nuit telle que définie dans la revendication 1.

Avantageusement, l'oculaire comporte une voie optique comportant un séparateur optique disposé entre le premier groupe optique et le second groupe optique, un cinquième groupe optique et un afficheur, l'image de l'afficheur donnée par le cinquième groupe optique et le séparateur optique étant confondue avec l'imageur.

Avantageusement, l'oculaire comporte une seconde voie comportant le séparateur optique, un sixième groupe optique et une matrice de photodétecteurs.

L'invention a également pour second objet un procédé tel que défini dans la revendication 4.

L'invention a pour autre objet une lunette de vision de nuit telle que définie dans la revendication 5.

L'invention a pour autre objet un procédé tel que défini dans la revendication 6.

L'invention sera mieux comprise et d'autres avantages apparaîtront à la lecture de la description qui va suivre donnée à titre non limitatif et grâce aux figures annexées parmi lesquelles :

La figure 1 représente une première lunette de vision de nuit selon l'art antérieur ;
La figure 2 représente une seconde lunette de vision de nuit selon l'art antérieur ;
La figure 3 représente un premier mode de réalisation d'une lunette de vision de nuit selon l'invention ;
La figure 4 représente un second mode de réalisation d'une lunette de vision de nuit selon l'invention.

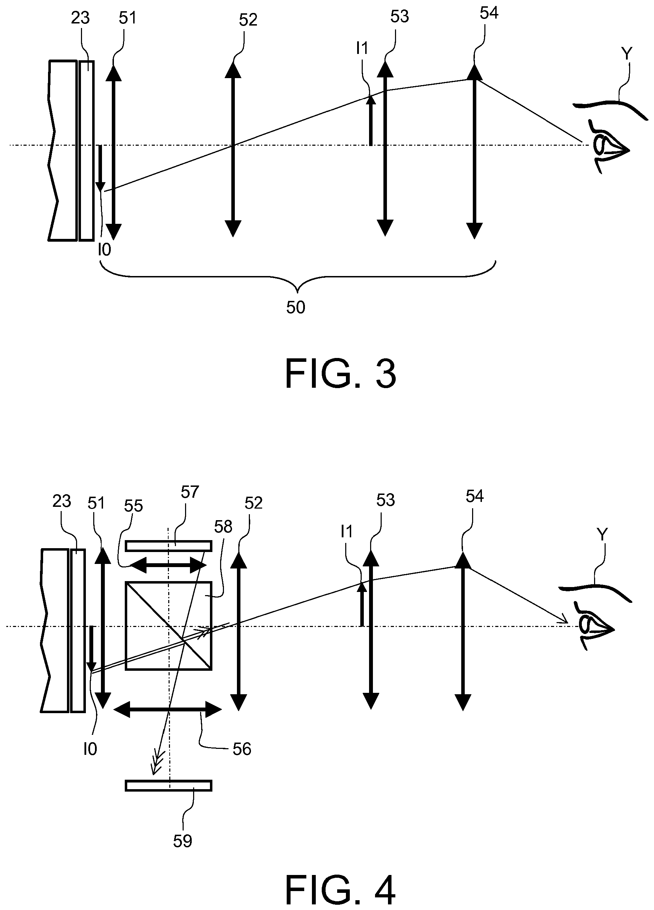

A titre d'exemple de réalisation non limitatif, la figure 3 représente la partie oculaire d'une lunette de vision de nuit selon l'invention. La lunette comporte un dispositif à intensificateur de lumière et un oculaire 50, le dispositif à intensificateur de lumière comportant un imageur 23. L'oculaire est à transport d'image. Il comporte un premier groupe optique 51 de champ disposé devant l'imageur, un second groupe optique d'ouverture 52 formant une image intermédiaire I1 inversée de l'imageur I0, un troisième groupe optique 53 disposé au voisinage de cette image intermédiaire et un quatrième groupe optique 54 formant de cette image intermédiaire une image redressée collimatée à l'infini visible par l'observateur Y. Au moins deux dioptres du premier groupe optique 51 ou du troisième groupe optique 53 et un dioptre du second groupe optique 52 comportent des surfaces asphériques calculées de façon à obtenir une distorsion de l'image redressée compatible de la résolution du dispositif à intensificateur de lumière.

Pour déterminer les surfaces asphériques, le procédé de calcul comporte les deux étapes suivantes :

- calcul des deux coefficients de distorsion du troisième ordre et du cinquième ordre de l'image redressée en fonction du rayon du champ objet, du rayon angulaire du champ image, de la focale paraxiale et de la résolution en en bord de champ ;
- optimisation des coefficients d'asphérisation d'au moins deux dioptres répartis entre le premier groupe optique et le troisième groupe optique et un dioptre du second groupe optique de façon que la distorsion calculée de l'image redressée corresponde à la distorsion définie par les deux coefficients de distorsion précédemment calculés.

Le calcul des coefficients de distorsion du troisième ordre et du cinquième ordre dans la première étape du procédé est le suivant. Ce calcul est effectué dans le cas d'un oculaire, on le transpose sans difficultés particulières au calcul des coefficients de distorsion d'un objectif.

Pour faire ce calcul, on adopte les notations suivantes :

| | |
|---|---|
| $F_0$ : | Focale paraxiale de l'oculaire |
| $\theta$ : | Angle d'un champ image de l'oculaire |
| $\theta_C$ : | Demi-angle maximal du champ image de l'oculaire |
| $r$ : | Hauteur d'un point image sur l'imageur |
| $r_I$ : | Rayon de l'imageur |
| $K_1$ : | Coefficient de distorsion du troisième ordre |
| $K_2$ : | Coefficient de distorsion du cinquième ordre |

A(θ) : Dérivée de la hauteur d'image en fonction de l'angle θ

A(0) : Dérivée de la hauteur d'image au centre du champ

On note $r_C = F_0.\tan\theta_C$ et on a les relations suivantes :

$$r = F_0.\tan\theta$$

$$r_I = r_C + K_1.r_C^3 + K_2.r_C^5$$

$$\frac{r_1 - r_C}{r_C^3} = K_1 + K_2.r_C^2$$

$$A(\theta) = \frac{\delta r(\theta)}{\delta\theta} = \frac{F_0}{\cos^2(\theta)}.\left[1 + 3.K_1.r^2 + 5.K_2.r^4\right]$$

$$A(0) = F_0$$

$$\frac{A(\theta)}{A(0)} = \frac{1}{\cos^2(\theta)}.\left[1 + 3.K_1.r^2 + 5.K_2.r^4\right]$$

On note $R_C = \frac{A(\theta_C)}{A(0)}$. Ce paramètre correspond à la variation de la résolution en bord de champ. Si l'on impose ce paramètre $R_C$, les coefficients de distorsion $K_1$ et $K_2$ s'en déduisent et l'on a :

$$K_1 = \frac{1}{2r_C^3}.\left[-r_C.(4 + R_C.\cos^2\theta_c) + 5r_1\right]$$

et

$$K_2 = \frac{1}{2r_C^5}.\left[r_C.(2 + R_C.\cos^2\theta_c) - 3r_1\right]$$

On peut également facilement calculer la distorsion D en bord de champ. Elle vaut :

$$D = \frac{(r_1 - r_C)}{r_C}$$

L'hypothèse de ce calcul est qu'il est possible de tolérer des distorsions importantes, pouvant atteindre plusieurs dizaines de pour cent, à condition que la variation de résolution en bord de champ soit maintenue dans des limites raisonnables de façon que l'utilisateur conserve une image de qualité acceptable, bien que distordue. Ce type de solution est mis en œuvre, par exemple, dans les objectifs grand angle de type « Fish-Eye » et, plus récemment, dans les objectifs de type panomorphes.

A titre de premier exemple d'application non limitatif, le dimensionnement d'un oculaire d'une lunette selon l'invention est le suivant. Cet oculaire a une focale paraxiale $F_0$ de 24 mm. Le rayon $r_I$ de l'imageur vaut 9 mm. La résolution de l'imageur du dispositif à intensificateur de lumière est de 64 pl/mm, ce qui correspond, compte-tenu de la valeur de la focale, à une résolution de 1.41 cy/mrad. Le symbole « cy » signifiant « cycle ». Le champ total de l'oculaire $2.\theta_C$ vaut donc 46.6 degrés. Si on tolère que la résolution en bord de champ baisse à 1.0 cy/mrad, on en déduit la valeur du paramètre $R_C$ qui vaut 0.64 et des coefficients de distorsion $K_1$ et $K_2$ qui valent respectivement :

$$K_1 = -0.88.E\text{-}03$$

$$K_2 = -3.11.E\text{-}06$$

Dans cet exemple, la distorsion D vaut 12.9 %.

A titre de second exemple d'application non limitatif, le dimensionnement d'un oculaire d'une lunette selon l'invention est le suivant. Cet oculaire a une focale paraxiale $F_0$ de 22 mm. Le rayon $r_I$ de l'imageur vaut 9 mm. La résolution de l'imageur du dispositif à intensificateur de lumière est de 64 pl/mm, ce qui correspond, compte-tenu de la valeur de la focale, à une résolution de 1.26 cy/mrad. Le champ total de l'oculaire $2.\theta_C$ vaut donc 70.0 degrés. Si on tolère que la résolution en bord de champ baisse à 0.33 cy/mrad, on en déduit la valeur du paramètre $R_C$ qui vaut 0.35 et des coefficients de distorsion $K_1$ et $K_2$ qui valent respectivement :

$$K_1 = -2.77.E\text{-}03$$

$$K_2 = +4.31.E\text{-}06$$

Dans cet exemple, la distorsion D vaut 41.6 %.

Les coefficients $K_1$ et $K_2$ et la courbe de distorsion associée étant déterminés, il est alors possible de déterminer pour chaque champ d'entrée de l'objectif compris entre 0 et $\theta_C$ la valeur cible de l'impact du rayon moyen sur l'imageur du tube intensificateur et de mettre cette valeur en contrainte lors de l'optimisation de la combinaison optique de l'oculaire. La présence de surfaces asphériques appartenant au premier groupe optique, proche de l'imageur et au troisième groupe optique permettent de s'approcher suffisamment près de la valeur cible mise en contrainte pour chaque champ. Plus précisément, on optimise les coefficients d'asphérisation d'au moins deux dioptres repartis entre le premier et le troisième groupe optique et d'un dioptre du deuxième groupe optique de façon que la distorsion calculée de l'image redressée corresponde à la distorsion définie par les deux coefficients de distorsion précédemment calculés.

Il est possible de la même façon, d'optimiser la conception d'un objectif de lunette de façon à tolérer une distorsion importante tout en gardant une bonne résolution en bord de champ. Dans ce cas, l'objectif comporte un premier ensemble optique et un second ensemble optique disposé au voisinage de la surface photosensible, au moins deux dioptres du premier ensemble optique et un dioptre du second ensemble optique comportent des surfaces asphériques calculées de façon à obtenir une distorsion de l'image redressée compatible de la résolution du dispositif à intensificateur de lumière. On calcule, par la méthode exposée précédemment, les coefficients de distorsion dans le troisième et le cinquième ordre.

Enfin, il est également possible d'optimiser non plus l'objectif ou l'oculaire mais les dioptres du dispositif à intensificateur. Ainsi, le dioptre d'entrée de la surface photosensible et/ou le dioptre de sortie de l'imageur peuvent comporter des surfaces asphériques calculées de façon à obtenir une distorsion de l'image redressée compatible de la résolution du dispositif à intensificateur de lumière.

L'architecture de l'oculaire est bien adaptée à l'intégration d'un séparateur optique permettant d'injecter une voie optique supplémentaire qui est vue par l'utilisateur. En effet, l'absence de pavé de fibres inverseuses en sortie du tube à intensificateur permet d'exploiter les rayons dont l'indicatrice d'émission converge par rapport à l'axe optique et donc de minimiser le diamètre et la longueur optique du séparateur par rapport aux solutions classiques.

A titre d'exemple, une architecture de ce type est représentée en figure 4. L'oculaire 50 de la figure 3 comporte une voie optique supplémentaire comportant un séparateur optique 58 disposé entre le premier groupe optique 51 et le second groupe optique 52, un cinquième groupe optique 55 et un afficheur 57. Cette voie supplémentaire est symbolisée par une double flèche. Dans le cas de la figure 4, le séparateur optique 58 est un cube séparateur comportant une lame semi-réfléchissante. Il serait possible de le remplacer par une lame optique simple. L'image de l'afficheur donnée par le cinquième groupe optique 55 et le séparateur optique 58 est confondue avec l'imageur du dispositif à intensificateur de lumière. L'utilisateur Y voit donc, en superposition, une image intensifiée issue du dispositif à intensificateur de lumière et l'image de l'afficheur.

Il est possible, en conservant cette architecture, d'ajouter une seconde voie supplémentaire comme on le voit sur la figure 4 en utilisant la voie non utilisée du séparateur optique 58. Cette seconde voie supplémentaire est symbolisée par une triple flèche. Sur la figure 4, cette seconde voie comporte un sixième groupe optique 56 et une matrice de photo détecteurs 59. On peut ainsi enregistrer l'image issue du dispositif à intensificateur de lumière.

Un autre avantage de cette solution est que, comme le tube intensificateur ne présente pas de pavé de fibres inverseur, il peut être déplacé sans dérive de parallélisme selon l'axe optique pour réaliser simplement une fonction de mise au point rapprochée couplée à un ajustement dioptrique simultané potentiellement utile pour une application monoculaire de la lunette. En effet pour passer d'une mise au point à l'infini à une mise au point, par exemple, à un mètre, correspondant à une convergence d'une dioptrie, la photocathode du tube intensificateur doit être éloignée autant que l'écran du tube intensificateur doit être rapproché de la partie optique en aval du tube pour que l'objet intensifié paraisse collimaté à un mètre de l'œil. Ceci est rendu possible parce que le grandissement de la lunette est unitaire. L'œil libre et l'œil intensifié observent un objet à une distance quasi identique, à la longueur de la lunette près. Le confort d'utilisation du monoculaire en mise au point rapprochée s'en voit nettement amélioré.

## Revendications

1. Lunette de vision de nuit comportant un objectif introduisant une distorsion de bord de champ supérieure ou égale à 12,9% un dispositif à intensificateur de lumière et un oculaire (50) de champ supérieur ou égal à 40 degrés, le dispositif à intensificateur de lumière et l'oculaire étant alignés sur un même axe, le dispositif à intensificateur de lumière comportant un imageur (23), l'oculaire étant à transport d'image et comportant un premier groupe optique (51) de champ disposé devant l'imageur, un second groupe optique (52) d'ouverture formant une image intermédiaire inversée de l'imageur, un troisième groupe optique (53) disposé au voisinage de cette image intermédiaire et un quatrième groupe optique (54) formant de cette image intermédiaire une image redressée, où au moins deux dioptres répartis entre le premier groupe optique et le troisième groupe optique et un dioptre du second groupe optique comportent des surfaces asphériques calculées de façon à obtenir une distorsion de l'image redressée telle qu'une baisse de la résolution de ladite image redressée induite par la distorsion en bord de champ soit inférieure ou égale à une valeur prédéterminée en pourcentage de la résolution de l'imageur du dispositif intensificateur.

2. Lunette de vision de nuit selon la revendication 1, **caractérisé en ce que** l'oculaire comporte une voie optique comportant un séparateur optique (58) disposé entre le premier groupe optique et le second groupe optique, un cinquième groupe optique (55) et un afficheur (57), l'image de l'afficheur donnée par le cinquième groupe optique et le séparateur optique étant confondue avec l'imageur.

3. Lunette de vision de nuit selon la revendication 2, **caractérisé en ce que** l'oculaire comporte une seconde voie comportant le séparateur optique, un sixième groupe optique (56) et une matrice de photodétecteurs (59).

4. Procédé de dimensionnement d'une lunette de vision de nuit selon l'une des revendications 1 à 3, l'oculaire ayant un champ objet de rayon déterminé ($\theta_C$), un champ de l'image redressée correspondant au champ objet de rayon angulaire déterminé, une focale paraxiale ($F_0$) déterminée et une résolution en bord de champ déterminée, **caractérisé en ce que** le procédé comporte les étapes suivantes pour le calcul dudit oculaire:

   - calcul des deux coefficients de distorsion du troisième ordre ($K_1$) et du cinquième ordre ($K_2$) de l'image redressée en fonction du rayon du champ objet, du rayon angulaire du champ image, de la focale paraxiale et de la résolution en bord de champ ;
   - optimisation des coefficients d'asphérisation d'au moins deux dioptres répartis entre le premier et le troisième groupe optique et d'un dioptre du deuxième groupe optique de façon que la distorsion calculée de l'image redressée en bord de champ corresponde à la distorsion définie par les deux coefficients de distorsion précédemment calculés.

5. Lunette de vision de nuit comportant un objectif introduisant une distorsion de bord de champ supérieure ou égale à 12,9% un dispositif à intensificateur de lumière et un oculaire (50) de champ supérieur ou égal à 40 degrés, le dispositif à intensificateur de lumière et l'oculaire étant alignés sur un même axe, le dispositif à intensificateur de lumière comportant une surface photosensible (21) et un imageur (23), l'oculaire étant à transport d'image et comportant un premier groupe optique (51) de champ disposé devant l'imageur, un second groupe optique (52) d'ouverture formant une image intermédiaire inversée de l'imageur, un troisième groupe optique (53) disposé au voisinage de cette image intermédiaire et un quatrième groupe optique (54) formant de cette image intermédiaire une image redressée, où au moins un dioptre d'entrée de la surface photosensible et/ou un dioptre de sortie de l'imageur comportent des surfaces asphériques calculées de façon à obtenir une distorsion de l'image redressée telle qu'une baisse de la résolution de ladite image redressée induite par la distorsion en bord de champ soit inférieure ou égale à une valeur prédéterminée en pourcentage de la résolution de l'imageur du dispositif intensificateur.

6. Procédé de dimensionnement d'une lunette de vision de nuit selon la revendication 5, l'oculaire comportant un premier groupe optique (51) de champ disposé devant l'imageur, un second groupe optique (52) d'ouverture formant une image intermédiaire inversée de l'imageur, un troisième groupe optique (53) disposé au voisinage de cette image intermédiaire et un quatrième groupe optique (54) formant de cette image intermédiaire une image redressée, l'oculaire ayant un champ objet de rayon déterminé, un champ de l'image redressée correspondant au champ objet de rayon angulaire déterminé, une focale paraxiale déterminée et une résolution en bord de champ déterminée, **caractérisé en ce que** le procédé comporte les étapes suivantes

   - calcul des deux coefficients de distorsion du troisième ordre ($K_1$) et du cinquième ordre ($K_2$) de l'image redressée en fonction du rayon du champ objet, du rayon angulaire du champ image, de la focale paraxiale et de la résolution en en bord de champ ;
   - optimisation des coefficients d'asphérisation d'au moins un dioptre d'entrée de la surface photosensible et/ou un dioptre de sortie de l'imageur comportent des surfaces asphériques de façon que la distorsion calculée de l'image redressée en bord de champ corresponde à la distorsion définie par les deux coefficients de distorsion précédemment calculés.

**Patentansprüche**

1. Nachtsichtgerät, das ein Objektiv, das eine Verzerrung am Rande des Feldes größer oder gleich 12,9% einbringt, eine Lichtverstärkervorrichtung und ein Okular (50) mit einem Feld größer oder gleich 40 Grad umfasst, wobei die Lichtverstärkervorrichtung und das Okular auf einer gleichen Achse ausgerichtet sind, die Lichtverstärkervorrichtung einen Bildgeber (23) umfasst, das Okular eines mit Bildtransport ist, und eine erste optische Gruppe (51) mit einem vor dem Bildgeber angeordneten Feld, eine zweite optische Gruppe (52) mit einer Öffnung, die ein umgekehrtes Zwischenbild des Bildgebers bildet, eine dritte optische Gruppe (53), die in der Nähe dieses Zwischenbildes angeordnet ist, und eine vierte optische Gruppe (54), die aus diesem Zwischenbild ein wieder aufgerichtetes Bild bildet, umfasst, wobei mindestens zwei zwischen der ersten optischen Gruppe und der dritten optischen Gruppe angeordnete Diopter und ein Diopter der zweiten optischen Gruppe asphärische Oberflächen umfassen, die berechnet sind, um eine Verzerrung des wieder aufgerichteten Bildes zu erhalten, sodass eine Verringerung der Auflösung des wieder aufgerichteten Bildes, die durch die Verzerrung am Rande des Feldes induziert wird, kleiner oder gleich einem vorbestimmten Wert in Prozenten der Auflösung des Bildgebers der Verstärkervorrichtung ist.

2. Nachtsichtgerät nach Anspruch 1, **dadurch gekennzeichnet, dass** das Okular einen optischen Pfad umfasst, der einen optischen Teiler (58), der zwischen der ersten optischen Gruppe und der zweiten optischen Gruppe angeordnet ist, eine fünfte optische Gruppe (55) und einen Anzeiger (57) umfasst, wobei das von der fünften optischen Gruppe und dem optischen Teiler gegebene Bild des Anzeigers mit dem Bildgeber zusammenfällt.

3. Nachtsichtgerät nach Anspruch 2, **dadurch gekennzeichnet, dass** das Okular einen zweiten Pfad umfasst, der den optischen Teiler, eine sechste optische Gruppe (56) und eine Photodetektorenanordnung (59) umfasst.

4. Verfahren zur Dimensionierung eines Nachtsichtgeräts nach einem der Ansprüche 1 bis 3, wobei das Okular ein Objektfeld mit einem bestimmten Radius ($\theta_C$), ein Feld des wieder aufgerichteten Bildes, das dem Objektfeld mit bestimmtem Winkelradius entspricht, eine bestimmte paraxiale Brennweite ($F_0$) und eine bestimmte Auflösung am Feldrand aufweist, **dadurch gekennzeichnet, dass** das Verfahren die folgenden Schritte zum Berechnen des Okulars umfasst:

- Berechnen der beiden Verzerrungskoeffizienten der dritten Ordnung ($K_1$) und der fünften Ordnung ($K_2$) des wieder aufgerichteten Bildes in Abhängigkeit vom Radius des Objektfeldes, dem Winkelradius des Bildfeldes, der paraxiale Brennweite und der Auflösung am Feldrand;
- Optimieren der Asphärisierungskoeffizienten von mindestens zwei zwischen der ersten und dritten optischen Gruppe verteilten Dioptern, und einem Diopter der zweiten optischen Gruppe, sodass die berechnete Verzerrung des wieder aufgerichteten Bildes am Feldrand der von den beiden zuvor berechneten Verzerrungskoeffizienten definierten Verzerrung entspricht.

5. Nachtsichtgerät, das ein Objektiv, das eine Verzerrung am Rande des Feldes größer oder gleich 12,9% einbringt, eine Lichtverstärkervorrichtung und ein Okular (50) mit einem Feld größer oder gleich 40 Grad umfasst, wobei die Lichtverstärkervorrichtung und das Okular auf einer gleichen Achse ausgerichtet sind, die Lichtverstärkervorrichtung eine lichtempfindliche Oberfläche (21) und einen Bildgeber (23) umfasst, das Okular eines mit Bildtransport ist, und eine erste optische Gruppe (51) mit einem vor dem Bildgeber angeordneten Feld, eine zweite optische Gruppe (52) mit einer Öffnung, die ein umgekehrtes Zwischenbild des Bildgebers bildet, eine dritte optische Gruppe (53), die in der Nähe dieses Zwischenbildes angeordnet ist, und eine vierte optische Gruppe (54), die aus diesem Zwischenbild ein wieder aufgerichtetes Bild bildet, umfasst, wobei mindestens ein Eingangsdiopter der lichtempfindlichen Oberfläche und/oder ein Ausgangsdiopter des Bildgebers asphärische Oberflächen umfassen, die berechnet sind, um eine Verzerrung des wieder aufgerichteten Bildes zu erhalten, sodass eine Verringerung der Auflösung des wieder aufgerichteten Bildes, die durch die Verzerrung am Rande des Feldes induziert wird, kleiner oder gleich einem vorbestimmten Wert in Prozenten der Auflösung des Bildgebers der Verstärkervorrichtung ist.

6. Verfahren zur Dimensionierung eines Nachtsichtgeräts nach Anspruch 5, wobei das Okular eine erste optische Gruppe (51) mit einem vor dem Bildgeber angeordneten Feld, und eine zweite optische Gruppe (52) mit einer Öffnung, die ein umgekehrtes Zwischenbild des Bildgebers bildet, eine dritte optische Gruppe (53), die in der Nähe dieses Zwischenbildes angeordnet ist, und eine vierte optische Gruppe (54), die aus diesem Zwischenbild ein wieder aufgerichtetes Bild bildet, umfasst, wobei das Okular ein Objektfeld mit bestimmtem Radius, ein Feld des wieder aufgerichteten Bildes, das dem Objektfeld mit vorbestimmtem Winkelradius entspricht, eine bestimmte paraxiale Brennweite und eine bestimmte Auflösung am Feldrand aufweist, **dadurch gekennzeichnet, dass** das Verfahren die folgenden Schritte umfasst:

- Berechnen der beiden Verzerrungskoeffizienten der dritten Ordnung ($K_1$) und der fünften Ordnung ($K_2$) des wieder aufgerichteten Bildes in Abhängigkeit vom Radius des Objektfeldes, dem Winkelradius des Bildfeldes, der paraxiale Brennweite und der Auflösung am Feldrand;
- Optimieren der Asphärisierungskoeffizienten von mindestens einem Eingangsdiopter der lichtempfindlichen Oberfläche und/oder einem Ausgangsdiopter des Bildgebers, die asphärische Oberflächen umfassen, sodass die berechnete Verzerrung des wieder aufgerichteten Bildes am Feldrand der von den beiden zuvor berechneten Verzerrungskoeffizienten definierten Verzerrung entspricht.

**Claims**

1. Night vision goggles comprising an objective lens which introduces a field edge distortion greater than or equal to 12.9%, a light intensification device and an eyepiece (50) with a field greater than or equal to 40 degrees, the light intensification device and the eyepiece being aligned on the same axis, the light intensification device comprising an imager (23), the eyepiece being of the image transport type and comprising a first optical group (51) with a field arranged in front of the imager, a second aperture optical group (52) forming an inverted intermediate image of the imager, a third optical group (53) arranged close to this intermediate image and a fourth optical group (54) forming a rectified image from this intermediate image, where at least two dioptres distributed between the first optical group and the third optical group and a dioptre of the second optical group comprise aspherical surfaces which are calculated in order to obtain a distortion of the rectified image so that a reduction of the resolution of the rectified image brought about by the field edge distortion is less than or equal to a predetermined value as a percentage of the resolution of the imager of the intensification device.

2. Night vision goggles according to claim 1, **characterized in that** the eyepiece comprises an optical path which comprises an optical separator (58) arranged between the first optical group and the second optical group, a fifth optical group (55) and a display (57), the image of the display given by the fifth optical group and the optical separator being merged with the imager.

3. Night vision goggles according to claim 2, **characterized in that** the eyepiece comprises a second path which comprises the optical separator, a sixth optical group (56) and a photodetector matrix (59).

4. Method for sizing night vision goggles according to any one of claims 1 to 3, the eyepiece having an object field with a predetermined radius ($\theta_C$), a rectified image field which corresponds to the object field with a predetermined angular radius, a predetermined paraxial focal length ($F_0$) and a predetermined field edge resolution,
**characterized in that** the method comprises the following steps for the calculation of the eyepiece:

- calculation of the two distortion coefficients of the third order ($K_1$) and the fifth order ($K_2$) of the rectified image as a function of the radius of the object field, the angular radius of the image field, the paraxial focal length and the field edge resolution;
- optimization of the aspherisation coefficients of at least two dioptres which are distributed between the first and the third optical group and a dioptre of the second optical group so that the calculated distortion of the rectified field edge image corresponds to the distortion defined by the two distortion coefficients calculated previously.

5. Night vision goggles comprising an objective lens which introduces a field edge distortion greater than or equal to 12.9%, a light intensification device and an eyepiece (50) with a field greater than or equal to 40 degrees, the light intensification device and the eyepiece being aligned on the same axis, the light intensification device comprising a photosensitive surface (21) and an imager (23), the eyepiece being of the image transport type and comprising a first optical field group (51) arranged in front of the imager, a second aperture optical group (52) forming an intermediate inverted image of the imager, a third optical group (53) arranged in the vicinity of this intermediate image and a fourth optical group (54) forming a rectified image from this image.
wherein at least one input dioptre of the photosensitive surface and/or an output dioptre of the imager comprise aspherical surfaces which are calculated in order to obtain a distortion of the rectified image so that a reduction of the resolution of the rectified image brought about by the field edge distortion is less than or equal to a predetermined value as a percentage of the resolution of the imager of the intensification device.

6. Method for sizing night vision goggles according to claim 5, the eyepiece comprising a first optical field group (51) which is arranged in front of the imager, a second aperture optical group (52) which forms an inverted intermediate image of the imager, a third optical group (53) arranged close to this intermediate image and a fourth optical group (54) which forms a rectified image from this intermediate image, the eyepiece having an object field with a predetermined radius, a field of the rectified image corresponding to the object field with a predetermined angular radius, a predetermined paraxial focal length and a predetermined field edge resolution.
**characterized in that** the method comprises the following steps:

- calculation of the two distortion coefficients of the third order ($K_1$) and the fifth order ($K_2$) of the rectified image as a function of the radius of the object field, the angular radius of the image field, the paraxial focal length and the field edge resolution;
- optimization of the aspherisation coefficients of at least one input dioptre of the photosensitive surface and/or an output dioptre of the imager comprise aspherical surfaces so that the calculated distortion of the rectified field edge image corresponds to the distortion defined by the two distortion coefficients calculated previously.

FIG. 1

FIG. 2

FIG. 3

FIG. 4

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5898519 A
- FR 2721719

- US 5604630 A